# EUROPEAN PATENT APPLICATION

(11) **EP 1 998 486 A1**
(43) Date of publication of application: **03.12.2008**
(21) Application number: 07425335.2
(22) Date of filing: 01.06.2007
(51) Int. Cl.: H04L 5/00, G06K 15/12, H04L 7/00, B41C 1/10

(54) **Exposure head and related control method**

(71) Applicant: Andromeda S.r.l., 81020 S. Marco Evangelista (CE) (IT)
(72) Inventor: De Giacomo, Luigi, 82026 Morcone (BN) (IT); Vannucci, Antonello, 00198 Roma (IT)
(74) Representative: Leone, Mario

(57) **Abstract**

An exposure head, of the type usable in an image forming device in particular in the field of the printing of lithographic plates, allows the use of a very high number of laser sources, globally having a power consistent with a high writing rate, and comprises: a monolithic array wherein a plurality of laser sources are formed; and a data feeding device for each of said sources, wherein said feeding device is provided to receive: a clock signal; a synchronization signal; and a high frequency serial flow of data, and comprises a parallelization system of said serial flow of data comprising a buffer for the data relay at a lower frequency through several channels to each laser source.

## Description

The present invention is related to an exposure head, of the type usable in an image forming device, e.g. in the field of the printing of plates aimed to be used in lithography processes, wherein the printed image on the plate is transferred and reproduced on other media, using the plate as a master.

Further, the invention concerns a control method of an exposure head as above specified.

Specifically, the invention is referred to an exposure head projecting a laser beam on said plate. The beams are modulated with wavelengths in the infrared field, and are projected on plates coated with a technopolymer photosensitive to said wavelength.

Generally, the greatest is the overall power used in the laser beams, greater is the printing rate, which is a critical factor for this typology of facility.

Various examples of exposure head as above specified are known. One typology provides the use of a certain number, few units, of single high-power laser (about 1 W) directly modulated. This constructional approach is the easiest, but it shows a relevant limitation to the maximum number of usable laser.

Further, practical problems are felt in the laser arranging, when the number thereof increases and anyway, wishing to keep a high spatial resolution in the writing mode, it is not possible to achieve a great net power for each laser.

Another typology provides the use of laser of greater power (5 ÷ 10 W) driven in a continuous wave condition, and a system of mobile deflectors carrying out the double function of creation of N separated beams and of digital modulation of the single beams. However, this system requires a very complex control limiting the writing rate.

A further typology provides the use of a monolithic array containing a large number of laser made on the semiconductor substrate.

This approach follows the general concept of the single laser use, but allows to reach a considerable number of sources, with a relevant saving in cost and complexity terms.

For the driving of such laser, a serial feeding of controls is usually used, to the different laser sources of the monolithic array, but this choice prevent the reaching of the optical pulse duration required (about 1 µs), for an effective writing in terms of produced plates, increasing the number of laser in the array up to and beyond 64.

The technical problem underlying the present invention is to provide an exposure head allowing to obviate to the drawbacks mentioned with reference to the prior art.

Such a problem is solved by an exposure head as above specified, comprising: a monolithic array wherein a plurality of laser sources are formed; and a data feeding device for each of said sources, wherein said feeding device is provided to receive: a clock signal; a synchronization signal; and a high frequency serial flow of data, and comprises a parallelization system of said serial flow of data comprising a buffer for the data relay at a lower frequency through several channels to each laser source.

According to the same inventive concept, the invention refers to a control method of an exposure head, comprising a step of feeding a plurality of laser sources, formed in a monolithic array, with a high frequency data serial flow, together with a clock signal and a synchronization signal, through a parallelization system comprising a buffer for dividing said serial flow in a plurality of parallel flows at a lower frequency.

The main advantage of the exposure head and of the related control method of the present invention lies in allowing the use of a very high number of laser sources, globally having a power consistent with a high writing rate.

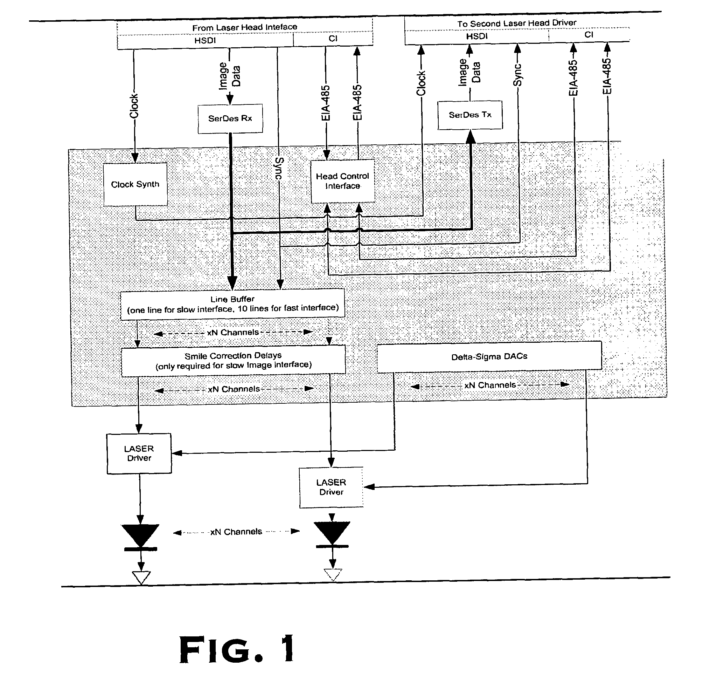

The present invention will be hereinafter disclosed according to a preferred embodiment thereof, provided to an exemplificative and non-limitative purpose, with reference to the annexed drawing wherein Figure 1 illustrates a block diagram of the data feeding device used in the present invention.

The exposure head of the present embodiment is formed by a module composed by a monolithic array having sixty-four laser sources, with a wavelength of 808 ±8 nm.

Frontally, i.e. between the monolithic array of laser sources and the plate to be printed, the exposure head comprises an optical system apt to focus the laser radiation emitted by the source on the plate to be printed.

Further, the head comprises a feeding device of the single sources, carried out by a suitable electronic board providing to generate the required signals for turning on the single laser.

Further, a container for the above mentioned components is provided. The optical system, in turn, is composed by a micro-optics, i.e. a lens assembly of size lower than one mm, placed at the nearest proximity of the laser sources, serving to collect the radiation emitted by the laser themselves, and by a macro-optics, having the function of focusing on the plate the beams collimated by the micro-optics.

In general, the above mentioned different components permit to focus the radiation emitted by the source on the plate and to modulate the radiation emitted by each single laser of the monolithic array at high speed, i.e. about 1 MHz, to print the plates used in a system of the type *Computer-To-Plate.*

The arrangement of the various components follows, considering the external size of the head, the standard of compactness required for the foreseen use.

Inside the laser head, instead, the signal is parallelized so that sequences at lower frequency can be fed to each laser.

With reference to the Figure, five data lines, embodied by respective cables connected to the data feeding device, get out from the laser driving board arranged inside a computer (not shown).

Respectively, the lines convey:
* a serial flow of data at high frequency, in the form of bits to be written by the laser sources according to a suitable sequence;
* a clock signal for the synchronization of the above data;
* a synchronization signal to indicate the start of the data to be used; and
* the data related to the set up of the laser sources, i.e. output power for each laser; the delay values of the emission for each laser, and the system conditions, i.e. the actually emitted power, the laser temperature.

These last data are transmitted and received at low speed.

In the head, a memorization system of the laser set up is provided.

Further, a parallelization system of said serial flow is provided, comprising a buffer for the relay of data at lower frequency through several channels to each laser source.

Finally, the device comprises an A/D conversion system for the generation of the currents required for the true laser driving.

The advantages of the head and of the control method lie in transforming a laser monolithic array in a system capable of writing the plate in a system *Computer-To-Plate* (CTP).

The innovatory solutions relate the electronics that, using a parallelization of the electric signals sent to the 64 diodes of the array, permits to achieve the requested modulation rates.

The above described optics has been carried out on the basis of standards typical of the CTP procedure with rotating outer drum, and the form of the focused beams is such to realise one approximately symmetric spot after the rotation of the drum for a period of length equal to the duration of the optical pulse.

To the above disclosed exposure head and related control method a man skilled in the art, to achieve further and contingent needing, can carry out additional changes and variants, all anyway embraced within the protection scope of the present invention, as defined by the annexed claims.

## Claims

1. Exposure head, of the type usable in an image forming device in particular in the field of the printing of lithographic plates, comprising:
* a monolithic array wherein a plurality of laser sources are formed; and
* a data feeding device for each of said sources,
wherein said feeding device is provided to receive: a clock signal; a synchronization signal; and a high frequency serial flow of data, and comprises a parallelization system of said serial flow of data comprising a buffer for the data relay at a lower frequency through several channels to each laser source.

2. Exposure head according to claim 1, wherein said monolithic array has at least sixty-four laser sources, with a wavelength of 808 ±8 nm.

3. Exposure head according to claim 1 or 2, comprising an optical system apt to focus the radiation emitted by the laser source on the plate to be printed, such as to realise on the outer surface of the drum for supporting a photosensitive plate one approximately symmetric spot after the rotation of the drum for a period of length equal to the duration of the optical pulse.

4. Exposure head according to claim 3, wherein the optical system is composed by a lens assembly of size lower than 1,0 mm, placed at the nearest proximity of the laser sources, serving to collect the radiation emitted by the laser themselves, and by a macro-optics, having the function of focusing on the plate the beams collimated by said lens assembly.

5. Exposure head according to any of the preceding claims, wherein the data feeding device receives the data related to the set up of the laser sources, i.e. output power for each laser; the delay values of the emission for each laser, and the system conditions, i.e. the actually emitted power, the laser temperature.

6. Exposure head according to claim 5, comprising a memorization system of the laser source set up.

7. Exposure head according to claim 5, wherein the data feeding device comprises an A/D conversion system for the generation of the currents required for the true laser driving.

8. Control method of an exposure head, of the type usable in an image forming device, in particular in the field of the printing of lithographic plates, comprising a step of feeding a plurality of laser sources, formed in a monolithic array, with a high frequency data serial flow, together with a clock signal and a synchronization signal, through a parallelization system comprising a buffer for dividing said serial flow in a plurality of parallel flows at a lower frequency.
